# FASCICULE DE BREVET EUROPEEN

(11) **EP 2 410 533 B1**
(45) Date de publication et mention de la délivrance du brevet: **06.03.2013**
(21) Numéro de dépôt: 11173594.0
(22) Date de dépôt: 12.07.2011
(51) Int. Cl.: H01B 3/30, F16C 32/04, F16C 39/06, H01B 3/44

(54) **Connexion électrique étanche pour machine tournante**
Dichter Stromanschluss für elektrisch umlaufende Maschine
Watertight electrical connection for rotating machine

(30) Priorité: 23.07.2010 FR 1056072
(43) Date de publication de la demande: 25.01.2012
(73) Titulaire: SOCIETE DE MECANIQUE MAGNETIQUE, 27950 Saint Marcel (FR)
(72) Inventeur: Moulin, David, 92120 Montrouge (FR); Lhostis, Roger, 27120 Douains (FR); Tellier, Bruno, 27600 Saint Julien de la Liegue (FR)
(74) Mandataire: David, Alain

(56) Documents cités:
- EP-A1- 0 671 746
- GB-A- 2 226 691
- JP-A- 4 334 946

## Description

### Domaine de l'invention

La présente invention se rapporte au domaine des paliers magnétiques pour machines tournantes et elle concerne plus particulièrement une connexion électrique étanche pour ces machines.

### Art antérieur

Les paliers magnétiques sont utilisés dans l'industrie pour permettre la rotation sans contact du rotor d'une machine tournante. Un palier magnétique peut être utilisé directement dans des environnements de traitement/extraction de gaz pressurisé, corrosif et chaud. Il est constitué, pour ses parties statoriques, de paquets de tôles magnétiques sur lesquels viennent prendre place des bobines électriques utilisées pour créer le champ magnétique nécessaire à la lévitation du rotor. Ce type de machine est bien connu et décrit par exemple dans le brevet EP 1 395 759 déposé au nom de la demanderesse. L'ensemble pouvant être disposé dans le flux de gaz corrosif, potentiellement conducteur électrique, il est nécessaire de protéger le conducteur de cuivre des bobines électriques de l'environnement, ainsi que d'isoler les fils de cuivre les uns des autres et par rapport à la masse.

La compatibilité de l'isolation des fils de cuivre avec l'environnement est un problème récurrent dans les applications industrielles, notamment les champs gaziers dont la composition du gaz peut varier avec le temps et n'est pas complètement maitrisée. De plus, l'ajout de fluide de process, comme par exemple le Mono Ethylène Glycol, peut altérer la qualité de l'isolation et provoquer une panne de l'ensemble de la machine tournante. En outre, des connexions entre bobines sont nécessaires afin de réaliser le circuit électrique de l'ensemble mais ces connexions représentent un point faible de l'isolation électrique, car sous pression elles sont susceptibles d'être mises à la masse par une entrée de fluide jusqu'au conducteur de cuivre. Cette mise à la masse doit être évitée à tout prix car elle provoque une panne du système complet, et éventuellement l'atterrissage du rotor.

La solution actuelle au problème d'isolation des connexions électriques consiste à utiliser un conducteur de cuivre isolé par différentes couches enrubannées, non-étanches, que l'on vient imprégner par une résine d'isolation électrique, typiquement une résine époxy. Cette résine a pour but de renforcer l'isolation électrique des fils les uns avec les autres, de protéger chimiquement les conducteurs de cuivre du gaz corrosif, mais aussi de remplir les vides entre ces conducteurs afin d'éviter tout risque d'éventuelle dépressurisation explosive, et de maintenir mécaniquement par collage les bobines électriques pour assurer leur étanchéité aux gaz.

Etant donné la grande variété d'ambiances chimiques, de pressions et de températures rencontrées dans les applications industrielles, il est très difficile de trouver une résine d'imprégnation qui puisse résister à toute cette variété. De plus, de par la difficulté à identifier tous les phénomènes de dégradation des résines électriques connues et leurs interactions avec les éléments du gaz, la validation de la protection chimique demande des essais lourds et coûteux à mettre en place, sur des installations en pratique peu répandues.

L'étape d'imprégnation des bobinages est donc une solution lourde à mettre en place en terme de mise en oeuvre car il s'agit d'un procédé consommant énormément de temps et de moyens, aussi bien humains que matériels. Par ailleurs, la toxicité des résines d'imprégnation électrique nécessite des protections individuelles importantes ainsi qu'une gestion contraignante des produits chimiques utilisés.

Il existe donc aujourd'hui un grand besoin pour un travail d'amélioration de l'isolation des connexions électriques depuis ces bobinages jusqu'à la sortie de l'environnement gazeux à l'extérieur de la machine tournante pour améliorer la fiabilité des paliers magnétiques et de leurs détecteurs dans les environnements de traitement des gaz.

### But et objet de l'invention

La présente invention a donc pour objet de renforcer la protection chimique des connexions et de les rendre étanches en changeant radicalement le concept de l'isolation, notamment en remplaçant le principe classique de protection des fils conducteurs par une résine d'imprégnation par un système d'isolation directement extrudé sur chaque fil conducteur, étanche et continue jusqu'à la sortie de la machine.

Ce but est atteint par une connexion électrique permettant d'assurer une liaison électrique étanche dans un environnement soumis à des gaz ou liquides corrosifs, caractérisée en ce qu'elle comporte :
- au moins deux conducteurs destinés à former entre eux ou avec un élément à connecter ladite connexion électrique,
- une couche d'isolant externe formée sur chacun desdits conducteurs et composée d'un polymère fluoré fusible à une température située entre la température dudit environnement et une température supérieure prédéterminée,
- une gaine thermo-rétractable entourant lesdits conducteurs et composée en couche externe d'un polymère thermo-rétractable et en couche interne dudit polymère fluoré fusible à une température située entre la température dudit environnement et ladite température supérieure prédéterminée,
la fusion par chauffage de ladite couche d'isolant externe desdits conducteurs et de ladite couche d'isolant interne de ladite gaine thermo-rétractable, à une température supérieure à ladite température dudit environnement et inférieure à ladite température supérieure prédéterminée, réalisant une soudure continue et étanche, d'épaisseur contrôlée.

Selon le mode de réalisation envisagé, ladite couche d'isolant externe desdits conducteurs et ladite couche interne de ladite gaine thermo-rétractable sont formées de FEP (fluorinated ethylene proprylene) ou ladite couche d'isolant externe desdits conducteurs est formée de PFA (perfluoroalkoxy copolymer).

Avantageusement, ladite couche interne de ladite gaine thermo-rétractable peut être d'épaisseur variable et adaptée à la zone à remplir autour de l'élément à connecter pour obtenir une soudure continue et parfaitement étanche.

De préférence, ladite connexion électrique comporte en outre une couche d'isolant interne sur chacun desdits conducteurs et résistant à des températures supérieures à ladite température supérieure prédéterminée.

Selon le mode de réalisation envisagé, ladite couche d'isolant interne dudit conducteur est formée de PEEK (polyetheretherketone) ou ladite couche d'isolant interne dudit conducteur et ladite couche externe de ladite gaine thermo-rétractable sont formées de PTFE (polyterafluoroethylène).

Avantageusement, ladite température dudit environnement est au plus égale à 200°C et ladite température prédéterminée est au moins égale à 300°C.

Ledit élément à connecter peut être une sonde de température rendue ainsi étanche à son environnement et l'un desdits conducteurs peut être un contact d'une traversée étanche.

De préférence, lesdits conducteurs sont utilisés comme élément chauffant lors de ladite fusion.

La connexion électrique de l'invention peut par exemple être utilisée dans l'un quelconque des dispositifs suivants : moteur électrique, palier magnétique, capteur de position de palier magnétique, capteur de vitesse de palier magnétique.

### Brève description des dessins

Les caractéristiques et avantages de la présente invention ressortiront mieux de la description suivante, faite à titre indicatif et non limitatif, en regard des dessins annexés sur lesquels :
- les figures 1A et 1B illustrent le principe de réalisation de connexion étanche selon l'invention,
- les figures 2A et 2B montrent un premier exemple de cette connexion étanche appliquée à une sonde de température, et
- la figure 3 montre un second exemple de cette connexion étanche appliquée à un passage de câbles électriques.

### Description détaillée d'un mode de réalisation préférentiel

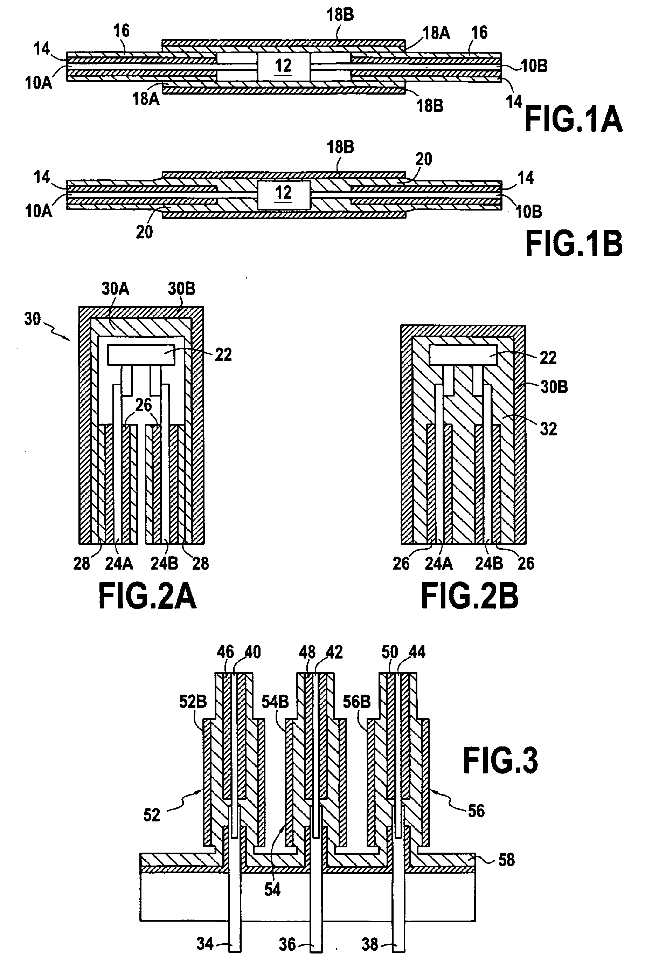

Selon l'invention, et comme le montrent les schémas de principe des figures 1A et 1B, l'isolation des fils et/ou câbles conducteurs 10A, 10B d'une connexion 12 ne repose plus sur l'adjonction d'une résine d'imprégnation électrique, mais sur une structure d'isolation comportant du fil conducteur vers l'extérieur :
● Une couche d'isolant 14 formée d'un polymère résistant chimiquement, extrudée sur le fil conducteur, typiquement un PTFE (polyterafluoroethylène) ou un PEEK (polyetheretherketone), ne montrant pas de température de fusion ou dont la température de fusion est très nettement supérieure à 300°C,
● Une couche d'isolant 16 formée de polymère fluoré fusible, typiquement un FEP (fluorinated ethylene proprylene) ou un PFA (perfluoroalkoxy copolymer), dont la température de fusion est supérieure à la température à laquelle est soumis le fil conducteur (température de l'application), typiquement 200°C maximum, mais très nettement inférieure à la température de fusion de la couche d'isolant précédente.

La première couche d'isolant 14 que l'on nommera dans la suite de la description « l'isolant interne » est une couche optionnelle alors que la seconde couche d'isolant 16 que l'on nommera plus avant « l'isolant externe » est toujours présente. Que la première couche d'isolant soit ou non présente, la seconde couche d'isolant est toujours extrudée sur cette première couche ou directement sur le fil conducteur. Par contre, la première couche d'isolant peut être extrudée ou simplement déposée par un autre procédé, notamment pour les câbles de gros diamètre.

Ce type d'isolation présente l'intérêt d'avoir une très grande stabilité chimique avec un très grand nombre d'environnements rencontrés dans les applications industrielles où l'on trouve des paliers magnétiques. Cette inertie chimique vis-à-vis d'environnements variés permet de garantir l'isolation des bobines de ces paliers par rapport à la masse, et ce jusqu'à des températures atteignant 200°C.

L'utilisation d'un polymère fluoré fusible comme couche d'isolant externe du fil conducteur 10A, 10B permet de réaliser des connexions étanches entre fils conducteurs par une fusion de cette couche 16 avec une couche similaire 18A d'une gaine de liaison 18 recouvrant la connexion et les extrémités des fils conducteurs auxquelles elle est reliée. Pour ce faire, cette gaine de liaison comporte une couche externe de polymère thermo-rétractable 18B permettant de mettre en pression les deux couches fusibles et de réaliser ainsi une soudure 20 continue (en remplissant les zones autour de la connexion dépourvues d'isolant fusible) et parfaitement étanche aux gaz et aux liquides, limitant ainsi le point faible que sont les connexions électriques. La fusion des deux couches est obtenue par chauffage à une température supérieure à la température de fusion de la couche d'isolant fusible, le fil conducteur pouvant être utilisé comme élément chauffant. Avantageusement, la fusion peut être faite sous vide afin d'éviter d'emprisonner des bulles ou poches d'air dans la connexion qui pourraient, suite à une exposition en milieu pressurisé, être à l'origine d'une dépressurisation explosive.

La couche d'isolant interne, non-fusible, est par contre optionnelle et peut être nécessaire pour garantir la continuité de l'isolation en cas de fluage à chaud de la couche d'isolant externe. C'est pour cela que sa température de fusion, si elle en possède une, doit être supérieure à celle de la couche d'isolant externe.

Ce principe de liaison étanche par soudure de deux couches d'isolant fusible peut sans difficulté particulière être généralisé aux différentes connexions de la machine, notamment les connexions des sondes de températures, qui sont aussi un des points faibles des machines fonctionnant dans des gaz corrosifs ou potentiellement humides. Ainsi, comme l'illustrent les figures 2A et 2B, une sonde de température 22 est reliée par deux conducteurs 24A, 24B à l'électronique de mesure (non représentée). Chaque conducteur comporte des premières et seconde couches d'isolant 26, 28 et la sonde est entourée d'une gaine de liaison 30 comportant une couche interne d'isolant fusible 30A et une couche externe de polymère thermo-rétractable 30B. L'épaisseur de la couche d'isolant interne 30A peut être variable et adaptée à la zone à remplir autour de la sonde de température de façon à obtenir après chauffage une soudure fusible 32 continue et parfaitement étanche.

Il est aussi évident que ce principe de liaison étanche peut aussi être appliqué aux connexions des traversées étanches qui permettent de sortir le signal/la puissance du milieu pressurisé pouvant exister dans une machine soumise à un tel milieu. En utilisant sur le contact de la traversée étanche une couche d'isolant fusible, on limite les pertes d'isolation dues à une infiltration de fluide jusqu'aux contacts. Ainsi, comme l'illustre la figure 3, les signaux délivrés sur trois contacts d'une traversée étanche 34, 36, 38 sont connectés directement à trois conducteurs 40, 42, 44. Chaque conducteur est recouvert des première 46, 48, 50 et seconde couches d'isolant et il est entouré d'une gaine de liaison 52, 54, 56 comportant une couche externe de polymère thermo-rétractable 52B, 54B, 56B et une couche interne d'isolant fusible qui après chauffage va venir former une soudure fusible 58 continue et parfaitement étanche avec la couche d'isolant externe recouvrant les contacts de la traversée étanche.

Ainsi, selon l'invention, l'utilisation d'un fil conducteur recouvert d'une couche d'isolant fusible avec une couche de même nature permet de se passer de l'opération d'imprégnation, passage contraignant en termes de temps, de main d'oeuvre et de gestion de produits chimiques, tout en assurant une bien meilleure protection envers les environnement agressifs.

## Revendications

1. Connexion électrique permettant d'assurer une liaison électrique étanche dans un environnement soumis à des gaz ou liquides corrosifs, **caractérisée en ce qu'**elle comporte :
. au moins deux conducteurs (10A, 10B ; 24A, 24B ; 34, 36, 38, 40, 42, 44) destinés à former entre eux ou avec un élément à connecter (12 ; 22) ladite connexion électrique,
. une couche d'isolant externe (16 ; 28) formée sur chacun desdits conducteurs et composée d'un polymère fluoré fusible à une température située entre la température dudit environnement et une température supérieure prédéterminée,
. une gaine thermo-rétractable (18 ; 30 ; 52, 54, 56) entourant lesdits conducteurs et composée en couche externe d'un polymère thermo-rétractable (18B ; 30B ; 52B, 54B, 56B) et en couche interne dudit polymère fluoré (18A ; 30A) fusible à une température située entre la température dudit environnement et ladite température supérieure prédéterminée,
la fusion par chauffage de ladite couche d'isolant externe desdits conducteurs et de ladite couche interne de ladite gaine thermo-rétractable, à une température supérieure à ladite température dudit environnement et inférieure à ladite température supérieure prédéterminée, réalisant une soudure continue et étanche, d'épaisseur contrôlée (20 ; 32 ; 58).

2. Connexion électrique selon la revendication 1, **caractérisée en ce que** ladite couche d'isolant externe desdits conducteurs et ladite couche interne de ladite gaine thermo-rétractable sont formées de FEP (fluorinated ethylene proprylene).

3. Connexion électrique selon la revendication 1, **caractérisée en ce que** ladite couche d'isolant externe desdits conducteurs est formée de PFA (perfluoroalkoxy copolymer).

4. Connexion électrique selon la revendication 1, **caractérisée en ce que** ladite couche interne de ladite gaine thermo-rétractable peut être d'épaisseur variable et adaptée à la zone à remplir autour dudit élément à connecter pour obtenir une soudure continue et parfaitement étanche.

5. Connexion électrique selon la revendication 1, **caractérisée en ce qu'**il comporte en outre une couche d'isolant interne sur chacun desdits conducteurs et résistant à des températures supérieures à ladite température supérieure prédéterminée.

6. Connexion électrique selon la revendication 5, **caractérisée en ce que** ladite couche d'isolant interne dudit conducteur est formée de PEEK (polyetheretherketone).

7. Connexion électrique selon la revendication 5, **caractérisée en ce que** ladite couche d'isolant interne dudit conducteur et ladite couche externe de ladite gaine thermo-rétractable sont formées de PTFE (polyterafluoroethylène).

8. Connexion électrique selon la revendication 1, **caractérisée en ce que** ladite température dudit environnement est au plus égale à 200°C.

9. Connexion électrique selon la revendication 1 ou la revendication 5, **caractérisée en ce que** ladite température prédéterminée est au moins égale à 300°C.

10. Connexion électrique selon l'une quelconque des revendications 1 à 9, **caractérisée en ce que** ledit élément à connecter est une sonde de température rendue ainsi étanche à son environnement.

11. Connexion électrique selon l'une quelconque des revendications 1 à 9, **caractérisée en ce que** l'un desdits conducteurs est un contact d'une traversée étanche.

12. Connexion électrique selon l'une quelconque des revendications 1 à 9, **caractérisée en ce que** lesdits conducteurs sont utilisés comme élément chauffant lors de ladite fusion.

13. Utilisation d'une connexion électrique selon l'une quelconque des revendications 1 à 9 dans l'un quelconque des dispositifs suivants : moteur électrique, palier magnétique, capteur de position de palier magnétique, capteur de vitesse de palier magnétique.

## Claims

1. An electrical connection for achieving leaktight electrical linking in an environment that is subjected to corrosive gases or liquids, **characterized in that** the connection comprises:
. at least two conductors (10A, 10B; 24A, 24B; 34, 36, 38, 40, 42, 44) for forming said electrical connection between each other or with a connector element (12; 22)
- an outer insulating layer (16; 28) formed on each of said conductors and made up of a fluorinated polymer that is meltable at a temperature situated between the temperature of said environment and a predetermined higher temperature;
- a heat-shrink sleeve (18; 30; 52, 54, 56) surrounding said conductors and made up of an outer layer of heat-shrink polymer (18B; 30B; 52B, 54B, 56B) and an inner layer of said fluorinated polymer (18A; 30A) that is meltable at a temperature situated between the temperature of said environment and said predetermined higher temperature;
melting said outer insulating layers of said conductors and said inner layer of said heat-shrink sleeve by heating to a temperature higher than said temperature of said environment and lower than said predetermined higher temperature, thereby making a weld that is continuous and leaktight, and of controlled thickness (20; 32; 58).

2. An electrical connection according to claim 1, **characterized in that** said outer insulating layers of said conductors and said inner layer of said heat-shrink sleeve are made of fluorinated ethylene propylene (FEP).

3. An electrical connection according to claim 1, **characterized in that** said outer insulating layers of said conductors are made of perfluoroalkoxy copolymer (PFA).

4. An electrical connection according to claim 1, **characterized in that** said inner layer of said heat-shrink sleeve may be of thickness that varies and is adapted to the zones for filling around said element for connection in order to obtain a weld that is continuous and completely leaktight.

5. An electrical connection according to claim 1, **characterized in that** it further includes an inner insulating layer on each of said conductors that withstands temperatures higher than said predetermined higher temperature.

6. An electrical connection according to claim 5, **characterized in that** said inner insulating layers of said conductors are made of polyetheretherketone (PEEK).

7. An electrical connection according to claim 5, **characterized in that** said inner insulating layers of said conductors and said outer layer of said heat-shrink sleeve are made of polytetrafluoroethylene (PTFE).

8. An electrical connection according to claim 1, **characterized in that** said temperature of said environment is no greater than 200°C.

9. An electrical connection according to claim 1 or claim 5, **characterized in that** said predetermined temperature is not less than 300°C.

10. An electrical connection according to any one of claims 1 to 9, **characterized in that** said element to be connected is a temperature probe that is thus sealed relative to its environment.

11. An electrical connection according to any one of claims 1 to 9, **characterized in that** one of said conductors is a contact of a leaktight bushing.

12. An electrical connection according to any one of claims 1 to 9, **characterized in that** said conductors are used as heater elements during said melting.

13. The use of an electrical connection according to any one of claims 1 to 9 in any of the following devices: an electric motor, a magnetic bearing, a magnetic bearing position sensor, a magnetic bearing speed sensor.

## Patentansprüche

1. Elektrische Verbindung, die ermöglicht, ein dichtes elektrisches Verbinden in einer korrosiven Gasen oder Flüssigkeiten ausgesetzten Umgebung sicherzustellen, **dadurch gekennzeichnet, daß** sie umfaßt:
- wenigstens zwei Leiter (10A, 10B; 24A, 24B; 34, 36, 38, 40, 42, 44), die dazu bestimmt sind, zwischen sich oder mit einem zu verbindenden Element (12; 22) die elektrische Verbindung zu bilden,
- eine äußere Isolierschicht (16; 28), die auf jedem der Leiter ausgebildet ist und die aus einem fluorierten Polymer besteht, das bei einer Temperatur zwischen der Temperatur der Umgebung und einer vorbestimmten höheren Temperatur schmelzbar ist,
- einen Schrumpfschlauch (18; 30; 52, 54, 56), der die Leiter umschließt und der aus einem Schrumpfpolymer (18B; 30B; 52B, 54B, 56B) als Außenschicht und aus dem fluorierten Polymer (18A; 30A), das bei einer Temperatur zwischen der Temperatur der Umgebung und der vorbestimmten höheren Temperatur schmelzbar ist, als Innenschicht besteht,
wobei das Schmelzen durch Erhitzen der äußeren Isolierschicht der Leiter und der Innenschicht des Schrumpfschlauchs auf eine Temperatur oberhalb der Temperatur der Umgebung und unterhalb der vorbestimmten höheren Temperatur eine durchgehende und dichte Schweißnaht mit kontrollierter Dicke (20; 32; 58) erzeugt.

2. Elektrische Verbindung nach Anspruch 1, **dadurch gekennzeichnet, daß** die äußere Isolierschicht der Leiter und die Innenschicht des Schrumpfschlauchs aus FEP (Fluorinated Ethylene Propylene) ausgebildet sind.

3. Elektrische Verbindung nach Anspruch 1, **dadurch gekennzeichnet, daß** die äußere Isolierschicht der Leiter aus PFA (Perfluoralkoxy-Copolymer) ausgebildet ist.

4. Elektrische Verbindung nach Anspruch 1, **dadurch gekennzeichnet, daß** die Innenschicht des Schrumpfschlauchs eine variable Dicke aufweisen und dem zu füllenden Bereich um das zu verbindende Elemente herum angepaßt sein kann, um eine durchgehende und vollkommen dichte Schweißnaht zu erhalten.

5. Elektrische Verbindung nach Anspruch 1, **dadurch gekennzeichnet, daß** sie ferner eine innere Isolierschicht auf jedem der Leiter umfaßt, die Temperaturen oberhalb der vorbestimmten höheren Temperatur standhält.

6. Elektrische Verbindung nach Anspruch 5, **dadurch gekennzeichnet, daß** die innere Isolierschicht des Leiters aus PEEK (Polyetheretherketon) ausgebildet ist.

7. Elektrische Verbindung nach Anspruch 5, **dadurch gekennzeichnet, daß** die innere Isolierschicht des Leiters und die Außenschicht des Schrumpfschlauchs aus PTFE (Polytetrafluorethylen) ausgebildet sind.

8. Elektrische Verbindung nach Anspruch 1, **dadurch gekennzeichnet, daß** die Temperatur der Umgebung höchstens gleich 200°C beträgt.

9. Elektrische Verbindung nach Anspruch 1 oder Anspruch 5, **dadurch gekennzeichnet, daß** die vorbestimmte Temperatur wenigstens gleich 300 °C beträgt.

10. Elektrische Verbindung nach einem der Ansprüche 1 bis 9, **dadurch gekennzeichnet, daß** das zu verbindende Element ein somit gegenüber seiner Umgebung abgedichteter Temperaturfühler ist.

11. Elektrische Verbindung nach einem der Ansprüche 1 bis 9, **dadurch gekennzeichnet, daß** einer der Leiter ein Kontakt einer dichten Durchführung ist.

12. Elektrische Verbindung nach einem der Ansprüche 1 bis 9, **dadurch gekennzeichnet, daß** die Leiter als Heizelement beim Schmelzen verwendet werden.

13. Verwendung einer elektrischen Verbindung nach einem der Ansprüche 1 bis 9, bei einer beliebigen der folgenden Vorrichtungen: Elektromotor, Magnetlager, Positionsgeber eines Magnetlagers, Drehzahlsensor eines Magnetlagers.
